# EUROPEAN PATENT APPLICATION

(11) **EP 0 598 124 A1**
(43) Date of publication of application: **25.05.1994**
(21) Application number: 92914383.2
(22) Date of filing: 02.07.1992
(51) Int. Cl.: C02F 1/20, B01D 19/00, C02F 1/00, C02F 1/36

(54) **SYSTEM FOR SUPPLYING PURE WATER AND CLEANING METHOD THEREFOR**

(30) Priority: 02.07.1991 JP 188146/91
(71) Applicant: OHMI, Tadahiro, Sendai-shi Miyagi-ken 980 (JP)
(72) Inventor: OHMI, Tadahiro, Sendai-shi Miyagi-ken 980 (JP)
(74) Representative: Weitzel, Wolfgang, Dr.-Ing. Patentanwalt
(86) International application number: JP9200838
(87) International publication number: WO9301133

(57) **Abstract**

A method of cleaning, wherein nitrogen and oxygen dissolved in water are degassed and the wettability with water of the surface of a substrate, in particular, a silicon wafer from which the insulating film has been removed is improved, whereby pure water is brought into contact with the surface of silicon, so that even a very small amount of impurities on the silicon can be completely cleaned away, and a system for supplying the pure water. One feature resides in that, in the system for supplying the pure water, a means (10) for degassing nitrogen and oxygen contained in the water is provided in the intermediate portion of a piping for supplying the pure water to a use point (14). Further, another feature resides in that a vessel, in which the pure water and a gas can coexist, is provided between the degassing means and the use point, and the interior of the vessel is filled up with a gas not containing nitrogen and oxygen. Furthermore, a further feature resides in that, in the method of cleaning the gas, the substrate is cleaned by use of the pure water supplied from the system for supplying the pure water.

## Description

### Technical Field

The present invention relates to a system for supplying pure water and a cleaning method, and in particular, relates to a system for supplying pure water and a cleaning method for cleaning silicon substrates which are used in cleaning processes in LSI manufacturing processes.

### Background Art

The conventional technology will be explained using the cleaning process of an LSI manufacturing process as an example.

In an LSI manufacturing process, an insulating film is formed on a silicon wafer, window-opening having a predetermined pattern is conducted in the insulating film, and then cleaning is conducted, and depending on the purpose, p-type or n-type elements are introduced, and a procedure, in which the above impurities are diffused or annealed in the silicon, is repeatedly conducted in a thermal diffusion furnace, and elements are thus formed.

When conducting heat treatment such as thermal diffusion or annealing or the like, if even a small amount of impurities such as, for example, metals or the like, adhere to the silicon surface, then the characteristics of the element which is formed worsen; for example, a drop in the base collector withstand voltage, an increase in leak currents, or the like, is experienced.

Accordingly, in semiconductor manufacturing processes, cleaning processes are extremely important in order to manufacture high-performance elements, and it is necessary to completely remove the contaminants on the silicon.

In the process of researching the effects of the cleaning processes of LSI on element characteristics, the present inventors have discovered that the impurities adhering to the silicon surface after window-opening cannot be completely removed by common cleaning methods, and that the small amounts of impurities constitute a hindrance in the development of high performance elements. That is to say, during cleaning by means of pure water, air remains in the interior of holes which have been opened, and this remaining air hinders the contact of the pure water and silicon surface. In the case of holes having a high aspect ratio, which have been in increasing demand as a result of the shift to highly integrated LSI, this tendency is even greater, and it is even more difficult to remove the small amounts of contaminants on the silicon.

In LSI manufacturing processes, there are cases in which pure water is used, the oxygen dissolved in which has been degassed, so as not to cause the formation of an oxide film on the silicon surface. However, as the chief component of air is nitrogen, when pure water which is saturated with nitrogen is employed, it is impossible to absorb the air remaining in the holes which have been opened, so that the small amounts of impurities are not cleaned from the silicon surface, but rather remain, and thus it was impossible to achieve a further improvement in element characteristics or a reduction in undesirable variation.

Furthermore, the silicon surface is normally not wettable with water after the removal of an oxide film, so that it is difficult to completely clean away a very small amount of impurities on the atomic level adhering to the silicon surface. From the point of view of the ultra LSI of high performance elements, such very small amounts of impurities constitute a large problem.

As explained above, as demands have increased for a shift to highly integrated and high-performance LSI, a cleaning method which is able to completely remove the impurities which hinder element performance has been strongly desired.

The present invention has as an object thereof to provide a cleaning method wherein, by degassing oxygen and nitrogen dissolved in water, and by improving the wettability with water of a substrate body surface, and in particular, of a surface of a silicon wafer from which an insulating film has been removed, pure water is brought into contact with a silicon surface, and very small amounts of impurities are completely cleaned away; and to provide a system for supplying the pure water.

### Disclosure of the Invention

The first feature of the invention resides in a pure water supply system wherein a mechanism for degassing nitrogen and oxygen gas in water is dispose d at an intermediate portion of a piping for supplying pure water to a use point.

A second feature resides in a substrate body cleaning method, wherein a substrate body is cleaned using pure water supplied by the pure water supply system constituting the first feature.

### (Embodiment Examples)

Hereinbelow, embodiment examples of the present invention will be explained.

The pure water of the present invention has a degree of purity suitable for use in cleaning procedures of semiconductor manufacturing processes. This pure water removes impurities as shown, for example, In Table 1; however, in cases of use in processes other than LSI manufacturing processes, other pure water may be used.

**TABLE 1**

| | |
|---|---|
| Specific Resistance | 18 MW·cm or more |
| TOC | ≦ 1 ppb |
| Silica | ≦ 1 ppb |
| Particles (0.07 micrometers) | ≦ 1/ml |
| Evaporation Residue | ≦ 1 ppb |

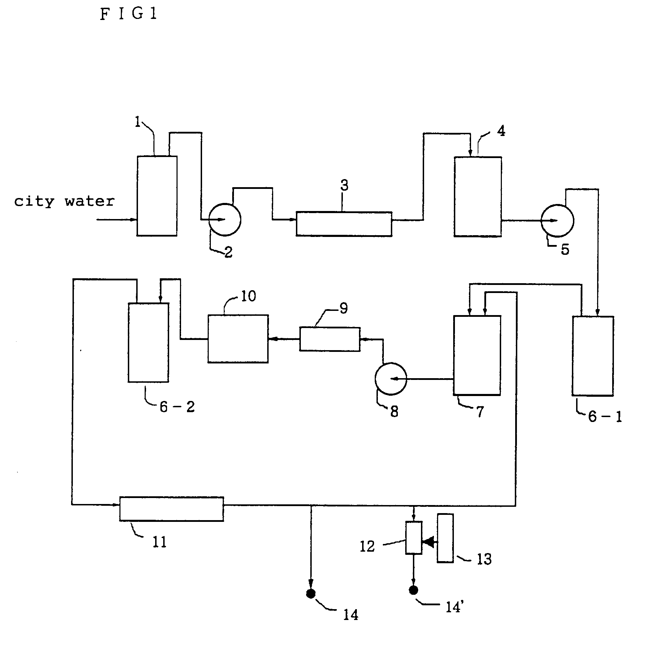

A structural example of the pure water supply system of the present invention is shown in Fig. 1; an example of the supply method will be explained using the Figure. Using city water as the source water, suspended matter dispersed in the water is removed by means of filtering apparatus 1, the water is then pressurized to a pressure of approximately 15 kg/cm² by means of high pressure pump 2, and is supplied to reverse osmosis unit 3. The transmitted water, approximately 95% of the ions of which have been removed in reverse osmosis unit 3, is stored in transmitted water tank 4. Furthermore, concentrated water containing a high concentration of ions is discharged outside the system.

Next, the transmitted water is supplied to a first ion exchanging column 6-1 by pump 5; here, this water becomes pure water having a specific resistance of approximately 16-18 MΩ·cm, and is stored in water storage tank 7. The water stored in water storage tank 7 is supplied to use point 14 by circulation pump 8 via circulation piping, and again is returned to water storage tank 7. A sterilization mechanism 9, a degassing apparatus 10, an ion exchanging column 6-2, and an ultrafiltration apparatus 11 are disposed along this circulation path. At the exit of the second ion exchanging column 6-2, the specific resistance of the water is 18 MΩ·cm or greater.

Sterilization mechanism 9 prevents the outbreak of bacteria in the pure water; examples thereof include an ozone pouring apparatus or an ultraviolet lamp or the like, but other methods may of course be employed.

Ultrafiltration apparatus 11 is provided in order to remove very small suspended matter or the remains of bacteria killed by sterilization mechanism 9.

Any degassing method may be employed in the present invention, insofar as the method is capable of degassing nitrogen and oxygen dissolved in water; for example, examples include the membrane degassing method, the vacuum degassing method, a bubbling method using a gas containing no nitrogen or oxygen, or the like.

In the membrane degassing method, a gas-permeable membrane, for example, a Teflon-type hollow fiber membrane or spiral membrane, fills a housing capable of withstanding a vacuum, water is introduced into the inner side of the membrane, the outer side of the membrane is placed under a reduced pressure within a range of 10-50 torr, and the dissolved nitrogen and oxygen present in the water are attracted to the vacuum side and are thus removed. By means of this method, the level of oxygen present, which is normally 8 ppm prior to degassing and the level of nitrogen present, which is normally 16 ppm prior to degassing, are reduced to post-degassing levels of approximately 300∼500 ppb in the case of oxygen and 600∼1000 ppb in the case of nitrogen.

In the vacuum degassing method, a filler material is disposed within a vacuum vessel, and in a state in which the interior thereof is placed under a reduced pressure within a range of 10∼50 torr, water is supplied onto the filler material from the upper portion of the vessel, and the nitrogen and oxygen dissolved in the water are degassed. By means of this method, the concentrations of dissolved oxygen and nitrogen present in the pure water are reduced to 50∼100 ppb in the case of oxygen and 100∼200 ppb in the case of nitrogen.

Since pure water produced by means of the above methods easily absorbs air, even in the case in which air remains in holes having a high aspect ratio, the air is absorbed into the pure water, so that the pure water and the silicon come in contact, and it is possible to completely clean away the small amount of impurities present on the silicon.

It is preferable that pure water obtained by means of the membrane degassing method or vacuum degassing method described above have the final dissolved oxygen and nitrogen concentrations thereof reduced to a level of less than 5 ppb in the case of oxygen and less than 10 ppb in the case of nitrogen, by means of bubbling a gas containing neither nitrogen nor oxygen, such as Ar gas, therethrough. By means of conducting the above bubbling, the ability of the pure water to absorb the air remaining in the holes is further increased.

In the present invention, a catalyst holding mechanism 12 and microwave generation mechanism 13 are provided between the above circulation path and the use point 14', and by means of irradiating microwaves while causing the pure water to come into contact with the catalyst, the cleaning effect of the pure water with respect to the contaminants on the silicon is further increased. By irradiating microwaves while causing contact with the catalyst, the wettability of the pure water with respect to the silicon wafer changes, and pure water which did not wet the silicon wafer is altered so as to wet the entire surface of the wafer. The reason for this is unclear; however, it is inferred that by irradiating microwaves in the presence of a catalyst, the hydrogen bonds between water molecules are broken, and because the water molecules, which had existed as gigantic molecules, act as molecules having fewer units, it becomes possible to wet the silicon wafer.

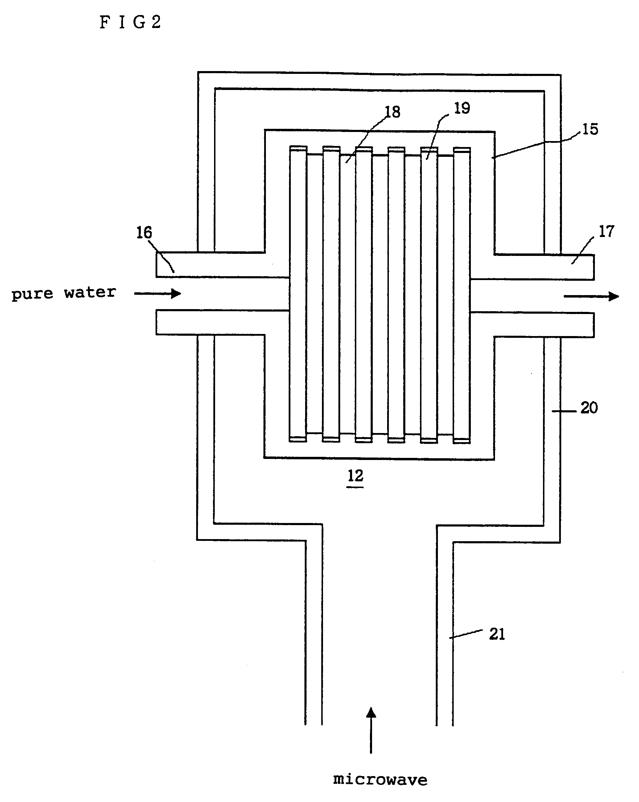

Any appropriate apparatus may be employed as the catalyst holding mechanism 12 which is used in the present invention, insofar as it is permeable by microwaves and is capable of holding the catalyst: for example, as shown in Fig. 2, it may be structured so that a plurality of Teflon sheet filters 19 possessing micropores on a level of 1∼5 micrometers and having a thickness of approximately 1 mm are inserted into a Teflon vessel 15, which has an inner diameter which is greater than that of pure water input port 16 and output port 17, so as to be perpendicular with respect to the flow direction of the pure water, and catalysts 18 are inserted between these Teflon filters to form catalyst layers. Pd, Pt, or the like may be used, for example, as the catalyst, and it is preferable, from the point of view of reactivity, that the particle diameter be within the range of 1∼10 micrometers. Furthermore, it is desirable that the width of the catalyst be small in order to suppress induction heating by means of the microwaves; for example, a width of approximately 1 mm is preferable. Furthermore, the microwaves are introduced so as to be parallel to the Teflon sheets and catalyst layers described above (in other words, so as to be perpendicular to the flow direction of the pure water).

Any apparatus may be employed as the microwave generating mechanism 13 of the present invention, insofar as it is capable of generating microwaves having a frequency of 1∼10 GHz; a magnetron-type generator is preferable in order to efficiently break the hydrogen bonds of the water. The output thereof varies according to the amount of pure water used; however, a generator on the level of 1 KW may be employed.

In the above description, an example was given in which the catalyst holding mechanism 12 and the microwave generating mechanism 13 were provided between the circulation system and the use point; however, these mechanisms may also be provided in the circulation system.

In the present invention, in order to remove very small amounts of impurities on the atomic level as well, it is preferable that the above degassing treatment and microwave treatment be combined.

### (Function)

As explained in the foregoing, by degassing the nitrogen and oxygen dissolved in the water, even in cases in which air remains in holes having a high aspect ratio, pure water containing neither nitrogen nor oxygen is capable of absorbing the remaining air, so that it becomes possible to cause the pure water and the silicon surface to come into contact, and very small amounts of impurities on the silicon can be removed.

Furthermore, by further irradiating the pure water with microwaves in the presence of a catalyst, the wettability of the pure water with respect to silicon changes greatly, and because the pure water and the silicon surface come into contact, the very small amounts of impurities adhering to the silicon surface can be cleaned away.

By means of the present invention, very small amounts of impurities adhering to a silicon surface can be completely removed, and it is thus possible to attain high performance elements.

### Brief Description of the Drawings

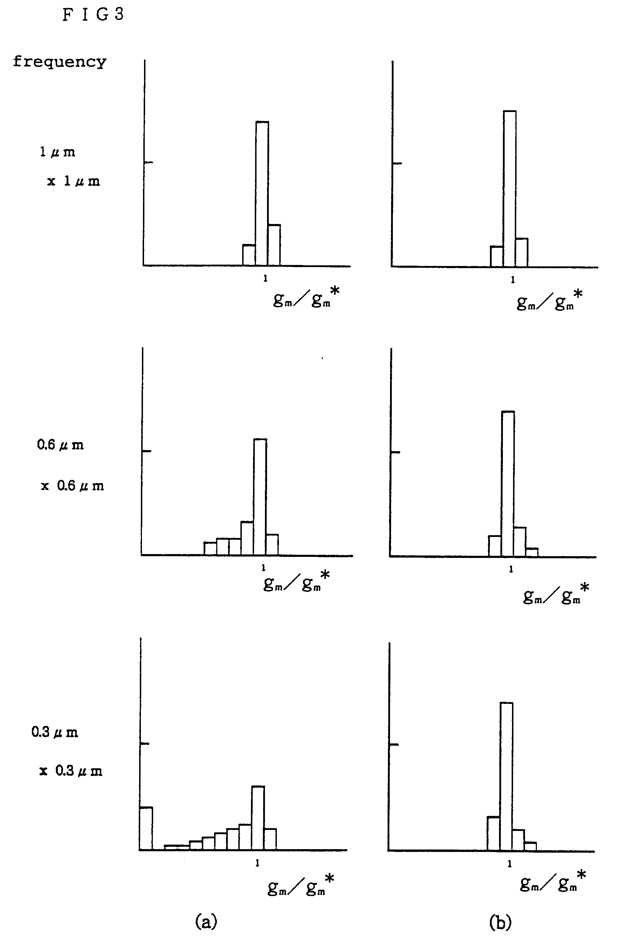

Fig. 1 is a concept diagram showing a structural example of a pure water production apparatus in accordance with the present invention. Fig. 2 is an outline cross-sectional diagram showing an example of a catalyst holding mechanism. Fig. 3 shows graphs showing the variation in mutual inductance characteristics of MOS transistors: (a) indicates a case in which conventional pure water is used in the cleaning procedure, while (b) indicates a case in which the pure water of the embodiments is used in the cleaning procedure.

### (Description of the References)

- 1: filtering apparatus,
- 2: high pressure pump,
- 3: reverse osmosis unit,
- 4: transmitted water tank,
- 5, 8: pumps,
- 6-1, 6-2: ion-exchanging columns,
- 7: water storage tank,
- 9: sterilization mechanism,
- 10: degassing apparatus,
- 11: ultrafiltration apparatus,
- 12: catalyst holding mechanism,
- 13: microwave generating mechanism,
- 14, 14': use points,
- 15: catalyst holding vessel,
- 16: pure water input port,
- 17: pure water output port,
- 18: catalyst,
- 19: Teflon filter,
- 20: resonator,
- 21: microwave waveguide.

### Best Mode for Carry out of the Invention

Hereinbelow, the present invention will be explained in detail using embodiments.

### (Embodiment 1)

Pure water was prepared using the pure water supply system shown in Fig. 1. A membrane degassing method and a bubbling method by means of Ar gas were concomitantly used in the degassing apparatus. The measurement of the dissolved oxygen present in the pure water was conducted using an Orbisfair 2713 dissolved oxygen meter. Furthermore, the dissolved oxygen was measured by creating a N₂ gas monitor using a gas chromatography temperature conduction detector. The various concentrations were measured at levels of nitrogen: 550 ppb, and oxygen: 280 ppb, after membrane degassing, and after Ar gas bubbling, the concentrations were nitrogen: 9 ppb, and oxygen: 4 ppb.

Furthermore, the catalyst holding mechanism 12 shown in Fig. 2 was disposed between the pure water circulation path and the use point 14', and microwaves were applied to the pure water. Here, Teflon filters having pores measuring 2 micrometers and having a thickness of 1 mm (DuPont Corp. polyethylene fluoride system fibers, hereinbelow identical) were used as the filters 19 of the catalyst holding mechanism 12, and 6 of these were inserted into the vessel. Pd powder having a particle diameter of 5∼6 micrometers was placed between the filters, and 5 catalyst layers were thus formed. The catalyst holding mechanism 12 was attached to the resonator 20 of the microwave generator 13, and microwaves of 2.45 GHz and 700 W were applied to the catalyst via microwave waveguide 21. The flow rate of the pure water was determined by a pump on the upstream side of the holding mechanism 12, and was set to 2 l/min.

In the method described above, pure water (1) was prepared which was subjected to degassing treatment, and pure water (2) was prepared which was subjected to degassing treatment and to microwave treatment.

In order to demonstrate that the present invention is effective in improving the device characteristics, an MOS transistor production test was conducted. Using a channel length of 0.5 micrometers and a channel width of 1.5 micrometers, 3 types of transistors were created on the same chip; one having a contact hole between the source and the drain having dimensions of 1 micrometer x 1 micrometer, one having a contact hole of 0.6 micrometers x 0.6 micrometers, and one having a contact hole of 0.3 micrometers x 0.3 micrometers.

Apart from the contact holes, all test production was conducted using 5:1 compact-type g-linesteppers. With respect to the contact holes, formation was conducted using g-linesteppers in the case of the 1 micrometer holes and the 0.6 micrometer holes; however, the formation of the 0.3 micrometer holes was conducted using EB direct writing.

The opening of the contacts was conducted by means of a reactive ion etching method using CF₄ and H₂ gasses. Subsequently, wafer cleaning was conducted by an RCA treatment, etching was conducted with dilute hydrofluoric acid, and then final cleaning was conducted using 3 types of pure water: conventional pure water (3), and pure waters (1) and (2) in accordance with the present embodiment. Subsequently, Al was deposited by a bias sputtering method, and after patterning, an evaluation of the characteristics of each transistor was conducted, and the mutual inductance gₘ was evaluated.

In order to observe the effects of the remaining impurities of the contact portions with good sensitivity, the post-metallization alloying annealing (sintering) was not conducted.

The results of the evaluation are shown in Fig. 3. Figs.3(a) and (b) show the results in the cases in which, respectively, conventional pure water (3) and degassing-treated pure water (1) were used in the final cleaning. Evaluation was conducted with respect to a number of transistors numbering approximately in the 10s to 100 under each set of conditions, and gₘ is shown as a value in which the actual measured value thereof is normalized by the average value gₘ* of each universe.

In samples in which final cleaning was conducted using conventional pure water, in the case of the 1 micrometer x 1 micrometer contact hole, the variation in gₘ was small; however, as the contact size grew smaller with dimensions of 0.6 micrometers and 0.3 micrometers, the variation became great on the smaller side of 1. This is so because as the contact holes become smaller, the air remains in the interior portions of the holes when conventional pure water is used and the wettability worsens, and since cleaning is insufficiently conducted, impurities remain in the bottom portions thereof, and the electrical contact between the metal and the silicon after metallization worsens.

However, in the case in which the pure water (1) of the present preferred embodiment was used in the final cleaning, as shown in Fig. 3(b), even if the contact size became small, a reduction in gₘ was not exhibited, and an extremely superior cleaning effect was confirmed. Furthermore, in the case in which pure water (2), which was subjected to both degassing treatment and microwave treatment, was used, the variation was reduced in comparison with the case shown in Fig. 3(b), but a large difference was not seen. The reason why a further large improvement was not observed in comparison in the case in which pure water (1), which was subjected to only degassing treatment, was used is thought to be that the variation in the processing dimensions became dominant.

### Industrial Applicability

In accordance with the present invention, the cleaning of silicon wafers becomes more complete, and very small amounts of impurities which could not be removed by means of conventional pure water can be cleaned away, so that high performance elements having better characteristics can be produced.

## Claims

1. A pure water supply system, wherein a means for degassing nitrogen and oxygen gas present in water is disposed at an intermediate portion of a piping for supplying pure water to a use point.

2. A pure water supply system in accordance with Claim 1, wherein a vessel in which pure water and a gas can coexist is provided between said degassing means and said use point, and the interior of said vessel is filled with a gas containing neither nitrogen nor oxygen.

3. A pure water supply system in accordance with Claim 2, wherein said gas containing neither nitrogen nor oxygen comprises Ar gas.

4. A pure water supply system in accordance with one of Claims 1 through 3 wherein, at said use point, concentrations of nitrogen and oxygen dissolved in the pure water are equal to or less than 1 ppm and 0.5 ppm, respectively.

5. A pure water supply system in accordance with one of Claims 1 through 4, wherein a catalyst holding means for holding a catalyst so as to make contact with water introduced into the interior thereof, and a microwave generating means for applying microwaves to water introduced into said catalyst holding means, are disposed at intermediate portions of said piping.

6. A substrate body cleaning method, wherein a substrate body is cleaned using pure water supplied by a pure water supply system in accordance with one of Claims 1 through 5.

7. A substrate body cleaning method in accordance with Claim 6, wherein said substrate body is made a silicon wafer having a silicon metal surface exposed on at least a portion of the surface thereof.

8. A substrate body cleaning method in accordance with claims 6 and 7, wherein said substrate body has holes, one side of which measures 3 micrometers or less, and an aspect ratio of which is 0.3 or more.

9. A substrate body cleaning method in accordance with Claim 8, wherein said substrate body has holes, one side of which measures 1 micrometer or less, and an aspect ratio of which is 1 or greater.
